# EUROPÄISCHE PATENTSCHRIFT

(11) **EP 1 470 838 B1**
(45) Veröffentlichungstag und Bekanntmachung des Hinweises auf die Patenterteilung: **05.04.2006**
(21) Anmeldenummer: 04008823.9
(22) Anmeldetag: 14.04.2004
(51) Int. Cl.: A62C 2/06, A62C 3/08, B64D 45/00

(54) **Verfahren zur Bekämpfung eines in einem geschlossenen Raum eines Flugzeuges auftretenden Feuers**
Method combatting fire in enclosed spaces aboard an aircraft
Procédé pour combattre un incendie dans des espaces clos à bord d'un aéronef

(30) Priorität: 26.04.2003 DE 10318975
(43) Veröffentlichungstag der Anmeldung: 27.10.2004
(73) Patentinhaber: Airbus Deutschland GmbH, 21129 Hamburg (DE)
(72) Erfinder: Bobenhausen, Axel, 28759 Bremen (DE)
(74) Vertreter: Hansmann, Dierk

(56) Entgegenhaltungen:
- WO-A-00/67849
- DE-A- 2 500 088
- GB-A- 2 376 706
- US-A- 5 090 639
- US-A- 5 842 524
- US-B1- 6 548 753

## Beschreibung

Die Erfindung betrifft ein Verfahren zur Früherkennung von Bränden durch Rauch und zur Brandbekämpfung in einem geschlossenen Raum eines Flugzeuges, vorzugsweise in einer Überkopf-Gepäckablage im Passagierbereich oder in einem Container im Frachtraum des Flugzeugs.

Derzeitige in einem Flugzeug verwendete geschlossene Räume sind nicht derart abgedichtet, daß die Voraussetzungen für eine Erstickung eines, in diesen Räumen ausgebrochenen Feuers gegeben sind. Die Undichtigkeitsstellen der Räume ermöglichen zwar in vorteilhafter Weise eine Früherkennung eines Feuers durch den Austritt von Rauch; jedoch erfolgt durch diese Undichtigkeitsstellen auch eine das Feuer begünstigende Zufuhr von Luft bzw. Sauerstoff. Dieses gilt beispielsweise auch für Überkopf-Gepäckablagen und Container im Passagierbereich bzw. im Frachtraum des Flugzeugs, in denen sich Feuer entwickeln und in nachteiliger weise auf den Passagier- bzw. Frachtraum des Flugzeuges übergreifen können.

Aus der US-A-5090 639 sind bereits Container für Flugzeuge bekannt, welche durch eine Behinderung einer Luftzufuhr als selbstlöschend im Sinne der Zulassungsvorschriften eingestuft sind. Diese grundsätzlich abgedichteten Behälter sind aufwendig ausgestaltet und ein Brandherd wird vom Grundsatz nicht von außen wahrgenommen.

Der Erfindung liegt daher die Aufgabe zugrunde, ein Verfahren vorzuschlagen, mit dem nach einer Hitzeentwicklung durch ein Feuer automatisch die Sauerstoffzufuhr abgeschnitten wird.

Die Aufgabe wird erfindungsgemäß durch die Verfahrensschritte gemäß Patentanspruch 1.

Erfindungsgemäße Weiterbildungen des Verfahrens sind dadurch gekennzeichnet,
- daß in einer Außenwand einer Überkopf-Gepäckablage ein definierter Schlitz zur Früherkennung von austretendem Rauch eingearbeitet wird, und daß parallel zu diesem Schlitz das aufschäumende und feuerfeste Material im Innenraum der Überkopf-Gepäckablage installiert wird,
- daß das aufschäumende und feuerfeste Material parallel zu den Spalten und Öffnungsklappen eines Containers in dessen Innenraum installiert wird, und/oder

Ferner wird vorgeschlagen, daß das aufschäumende und feuerfeste Material als Klebeband im Bereich der Durchtritte aufbringbar ist.

Der wesentliche vorteil der Erfindung besteht darin, daß nach dem frühen Erkennen des durch ein Feuer verursachten Rauches im Passagierbereich eines Flugzeuges oder im Frachtladeraum das durch die entstehende Hitze aufschäumende, d.h. volumenvergrößernde sowie feuerfeste Material aufgrund seiner Dichtwirkung zur Minimierung der Luft- bzw. Sauerstoffzufuhr in den geschlossenen Raum bzw. zu dessen vollständigen Abdichtung führt. Dies erleichtert die Bekämpfung eines Feuers in Überkopf-Gepäckablagen und kann bei entsprechender Auslegung der Gepäckablage in vorteilhafter Weise zur Selbstlöschung des Feuers führen. Dieses gilt auch für andere geschlossene Räume im Flugzeug, wie für im Frachtraum vorhandene Container. Weitere erfindungsgemäße Vorteile liegen in einer kostengünstigen Optimierung des Feuerschutzes im Flugzeug, in der Verbesserung der Selbstlöschungseigenschaften von Flugzeugcontainern und in dem verhältnismäßig geringen zusätzlichen Gewicht.

In der Zeichnung sind Ausführungsbeispiele nach der Erfindung schematisch dargestellt. Es zeigen:
- Fig. 1a:: eine Überkopfgepäckablage in Vorderansicht,
- Fig. 1b:: eine prinzipielle Seitenansicht der Überkopfgepäckablage gemäß Fig. 1a,
und
- Fig. 2:: einen Frachtraum-Container in einer perspektivischen Vorder- und Seitenansicht.

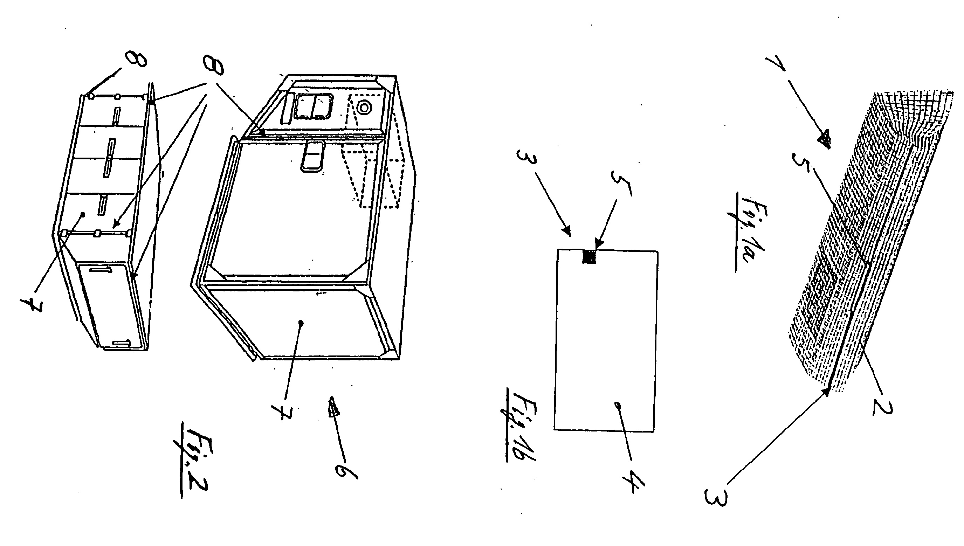

In Fig. 1a ist die Überkopf-Gepäckablage 1 durch einen nach oben aufklappbaren Deckel 2 verschlossen, wobei die Vorderkante des Deckels 2 einen definierten Spalt 3 aufweist. Der Spalt 3 ermöglicht die Früherkennung eines im Innenraum der Gepäckablage 1 entstehenden Feuers aufgrund von durch den Spalt 3 austretenden Rauch. Wie aus der Seitenansicht von Fig. 1b zu ersehen ist, befindet sich im Innenraum 4 der Gepäckablage 1 oberhalb des Spaltes 3 das mit 5 bezeichnete aufschäumende und feuerfeste Material, welches vorzugsweise parallel zum Spalt 3 installiert sowie in Form eines Klebebandes verwendet wird. Das Material 5, für welches das unter der Markenbezeichnung "Palusol" der Fa. BASF AG auf dem Markt befindliche Material verwendet werden kann, schäumt bei entstehender Hitze aufgrund eines Feuers auf und dichtet den Spalt 3 ab. Somit führt das volumenvergrößernde sowie feuerfeste Material aufgrund seiner Dichtwirkung zur Minimierung der Luft- bzw. Sauerstoffzufuhr in den geschlossenen Innenraum 4 der Gepäckablage 1 Raum bzw. zu dessen vollständiger Abdichtung.

Der aus Fig. 2 ersichtliche Container 6 weist in seinem Innenraum 7 angeordnete aufschäumende und feuerfeste Materialien 5 auf, die ebenso wie bei der oben beschriebenen Gepäckablage 1 in der Nähe von Undichtigkeitsstellen 8 des Containers 6 angeordnet sind sowie die oben angesprochenen Aufgaben erfüllen. Auch diese Materialien 5 sind zweckmäßigerweise parallel zu den Spalten und Öffnungsklappen, die als Undichtigkeitsstellen 8 des Containers 6 anzusehen sind, im Innenraum 7 des Containers 6 installiert, vorzugsweise in Form von Klebebändern.

## Patentansprüche

1. Verfahren zur Früherkennung von Bränden durch Rauch und zur Brandbekämpfung in einem geschlossenen Raum eines Flugzeuges, vorzugsweise in einer Überkopf-Gepäckablage (1) im Passagierbereich oder in einem Container (6) im Frachtraum des Flugzeugs, wobei der Rauch aus Undichtigkeitsstellen (3, 8) des geschlossenen Raumes, wie Spalten, Klappen oder dergleichen austritt und in der Nähe der Undichtigkeitsstellen (3, 8) jeweils ein durch Hitzeeinwirkung aufschäumendes volumenvergrößerndes feuerfestes Material (5) installiert wird, und daß das feuerfeste Material (5) bei Auftritt eines Feuers erhitzt und derart aufgeschäumt wird, daß die zugeordnete Undichtigkeitsstelle (3, 8) abgedichtet und die Luft- /Sauerstoffzufuhr durch diese Undichtigkeitsstelle (3, 8) vermindert bzw. verhindert wird.

2. Verfahren nach Anspruch 1, **dadurch gekennzeichnet, daß** in einer Außenwand (2) einer Überkopf-Gepäckablage (1) ein definierter Schlitz (3) zur Früherkennung von austretendem Rauch eingearbeitet wird, und daß parallel zu diesem Schlitz (3) das aufschäumende und feuerfeste Material (5) im Innenraum (4) der Überkopf-Gepäckablage (1) installiert wird.

3. Verfahren nach Anspruch 1, **dadurch gekennzeichnet, daß** das aufschäumende und feuerfeste Material (5) parallel zu den Spalten und Öffnungsklappen (8) eines Containers (6) in dessen Innenraum (7) installiert wird.

## Claims

1. Method for the early detection of fires by means of smoke and for fighting fire in a closed space in an aircraft, preferably in an overhead luggage repository (1) in the passenger area or in a container (6) in the cargo compartment of the aircraft, wherein the smoke escapes from leakage points (3, 8) in the closed space, such as fissures, flaps or the like, and a refractory material (5) which foams up as a result of the action of heat and increases in volume is installed in the vicinity of said leakage points (3, 8) in each case, and that said refractory material (5) is heated up when a fire occurs and is foamed up in such a way that the associated leakage point (3, 8) is sealed and the admission of air/oxygen through the said leakage point (3, 8) is reduced or prevented.

2. Method according to Claim 1, **characterised in that** a defined slit (3) for the early detection of escaping smoke is incorporated in an outer wall (2) of an overhead luggage repository (1), and that the refractory material (5) which foams up is installed, parallel to the said slit (3), in the interior space (4) of said overhead luggage repository (1).

3. Method according to Claim 1, **characterised in that** the refractory material (5) which foams up is installed, parallel to the fissures and opening flaps (8) of a container (6), in the interior space (7) of said container.

## Revendications

1. Procédé pour détecter précocement des incendies par leur fumée et pour les combattre dans un espace clos à bord d'un aéronef, de préférence dans un casier à bagages (1) situé au-dessus de la tête des passagers ou dans un container (6) situé dans la soute de l'aéronef, selon lequel la fumée sort à travers des zones de non étanchéité (3, 8) de l'espace clos, telles que des fentes, des clapets ou similaires, et près desquelles est installé un matériau (5) résistant au feu mais augmentant de volume en se transformant en mousse sous l'effet de la chaleur, de sorte que ce matériau (5) se trouve échauffé quand apparaît un feu, et se transforme en mousse qui obture la zone de non étanchéité associée (3, 8) en empêchant ou en diminuant l'arrivée d'air ou d'oxygène à travers cette zone de non étanchéité.

2. Procédé selon la revendication 1, **caractérisé en ce que** dans une paroi externe (2) d'un casier à bagages (1) situé au-dessus de la tête des passagers est usinée une fente (3) définie pour détecter précocement la fumée sortante et que parallèlement à cette fente (3) le matériau (5) résistant au feu et se transformant en mousse est installé dans le volume interne du casier à bagages (1).

3. Procédé selon la revendication 1, **caractérisé en ce que** le matériau (5) résistant au feu et se transformant en mousse est installé parallèlement aux fentes et clapets d'ouverture (8) d'un container (6), dans le volume interne (7) de celui-ci.
